# EUROPEAN PATENT SPECIFICATION

(11) **EP 4 212 361 B1**
(45) Date of publication and mention of the grant of the patent: **19.11.2025**
(21) Application number: 21866887.9
(22) Date of filing: 10.09.2021
(51) Int. Cl.: B60C 11/12, B60C 5/00, B60C 11/03

(54) **TIRE**
REIFEN
PNEUMATIQUE

(30) Priority: 10.09.2020 JP 2020152317
(43) Date of publication of application: 19.07.2023
(73) Proprietor: The Yokohama Rubber Co., Ltd., Hiratsuka-shi, Kanagawa 254-8601 (JP)
(72) Inventor: KOISHIKAWA, Yoshifumi, Hiratsuka-shi, Kanagawa 254-8601 (JP)
(74) Representative: Dilg, Haeusler, Schindelmann Patentanwaltsgesellschaft mbH
(86) International application number: PCT/JP2021/033411
(87) International publication number: WO 2022/054930

(56) References cited:
- WO-A1-2006/059640
- JP-A- 2006 151 229
- JP-A- 2006 151 236
- JP-A- 2007 015 621
- JP-A- 2009 286 212
- JP-A- 2011 073 475
- JP-A- 2018 039 337
- JP-A- 2019 026 016

## Description

### Technical Field

The present invention relates to a tire and particularly relates to a tire in which a plurality of sipes is disposed on a tread surface.

### Background Art

In recent years, the studless tire having braking performance on ice and running performance on snow in a compatible manner have been awaited. To improve braking performance on ice, this type of studless tire includes a plurality of sipes disposed in a tread surface of a land portion and sipes in the same block disposed separated (divided) in a tire width direction, thus ensuring block rigidity and preventing clogging of snow or ice in the sipes.

On the other hand, the configuration described above causes a ground contact pressure to locally increase in a portion where the sipes are separated in the tire width direction orthogonal to a tire circumferential direction, degrading the load durability performance. Thus, a known configuration in which a circumferential groove extending in a tire circumferential direction is provided in a portion where sipes are separated in a tire width direction is proposed (see, for example, JP 2018-34524 A).

JP 2006 151236 A and WO 2006/059640 A1 disclose a studless tire with improved performance on icy, snow-covered and wet roads. The tire comprises circumferential grooves and lug grooves defining land portions. The tire further comprises sipes extending in a direction intersecting the circumferential main grooves and two sets of narrow grooves in each land portion, extending in different directions in the tire circumferential direction.

JP 2009 286212 A discloses a tire comprising land portions comprising sipes and narrow grooves. The sipes have an inclination angle with respect to the tire circumferential direction of 90°.

JP 2018 039337 A also relates to a tire comprising land portions comprising sipes and inclined narrow grooves. The sipes have an inclination angle with respect to the tire circumferential direction of 90°.

### Summary of Invention

### Technical Problem

Tires including sipes in the same block disposed separated in the tire width direction have room for further improvement on braking performance on ice and running performance on snow.

In view of the foregoing, an object of the present invention is to provide a tire that can provide improved braking performance on ice and running performance on snow.

### Solution to Problem

To solve the problem described above and achieve the object, a tire according to an embodiment of the present invention includes, in a tread portion, a plurality of circumferential main grooves extending in a tire circumferential direction, a plurality of lug grooves extending in a direction intersecting the circumferential main grooves, and a plurality of land portions defined by the circumferential main grooves and arranged in the direction intersecting the circumferential main grooves. A specific land portion that is at least one of the land portions includes, in a ground contact surface, a plurality of sipes extending in the direction intersecting the circumferential main grooves and a plurality of narrow grooves extending in the direction intersecting the circumferential main grooves and having a groove depth of 1.50 mm or less. In a central region in the tire width direction, the sipes and the narrow grooves have different directions extending in the tire circumferential direction when extending from one side toward another side in the width direction. In both edge regions on an outer side from the central region in the tire width direction, the sipes and the narrow grooves have the same direction extending in the tire circumferential direction when extending from the one side toward the other side in the width direction. The specific land portion includes a land portion including at least one land portion on an outer side in the tire width direction defined as a side away from the tire equatorial plane in the tire width direction. Further, the plurality of narrow grooves extends without intersecting each other.

The specific land portion preferably includes a plurality of blocks defined by the circumferential main grooves and the lug grooves.

A length of the specific land portion in a direction intersecting the circumferential main grooves is regarded as 100%, and a length of the central region in the direction intersecting the circumferential main grooves is preferably 60% or more and 80% or less.

The sipes preferably have an inclination angle with respect to the tire circumferential direction of 45° or more and 80° or less.

The narrow grooves preferably have an inclination angle with respect to the tire circumferential direction in the central region of 40° or more and 65° or less.

The narrow grooves preferably have an inclination angle with respect to the tire circumferential direction in the edge regions of 50° or more and 80° or less.

The narrow grooves preferably have a groove depth of 0.05 mm or more and 1.50 mm or less and a groove width of 0.10 mm or more and 0.80 mm or less, and a distance between the narrow grooves adjacent to each other is preferably 0.50 mm or more and 2.00 mm or less.

An end of the narrow grooves in the central region is preferably connected to an end of the narrow grooves in the edge regions.

### Advantageous Effects of Invention

The tire according to an embodiment of the present invention can provide improved braking performance on ice and running performance on snow.

### Brief Description of Drawings

FIG. 1 is a plan view illustrating a tread surface of a pneumatic tire according to the present embodiment.
FIG. 2 is an enlarged view illustrating one shoulder land portion on the tread surface of the pneumatic tire according to the present embodiment.
FIG. 3 is an enlarged view illustrating one second land portion on the tread surface of the pneumatic tire according to the present embodiment.
FIG. 4 is an enlarged view illustrating one center land portion on the tread surface of the pneumatic tire according to the present embodiment.
FIG. 5 is an enlarged view illustrating another center land portion on the tread surface of the pneumatic tire according to the present embodiment.
FIG. 6 is an enlarged view illustrating another second land portion on the tread surface of the pneumatic tire according to the present embodiment.
FIG. 7 is an enlarged view illustrating another shoulder land portion on the tread surface of the pneumatic tire according to the present embodiment.
FIG. 8 is a plan view illustrating a tread surface of a pneumatic tire according to another embodiment.

### Description of Embodiments

Embodiments of the present invention will be described in detail below with reference to the drawings. However, the present invention is not limited by the following embodiments. Constituents of these embodiments include elements that are essentially identical or that can be substituted or easily conceived by one skilled in the art.

A pneumatic tire according to the present embodiment will be described. In the following description, a tire radial direction refers to a direction orthogonal to a rotation axis of the tire, an inner side in the tire radial direction refers to a side toward the rotation axis in the tire radial direction, and an outer side in the tire radial direction refers to a side away from the rotation axis in the tire radial direction. In addition, a tire circumferential direction refers to a circumferential direction about the rotation axis as a center axis. Moreover, a tire width direction refers to a direction parallel to the rotation axis, an inner side in the tire width direction refers to a side toward a tire equatorial plane (tire equator line) in the tire width direction, and an outer side in the tire width direction refers to a side away from the tire equatorial plane in the tire width direction. Note that "tire equatorial plane" refers to the plane orthogonal to the rotation axis of the pneumatic tire, the plane passing through the center of the tire width.

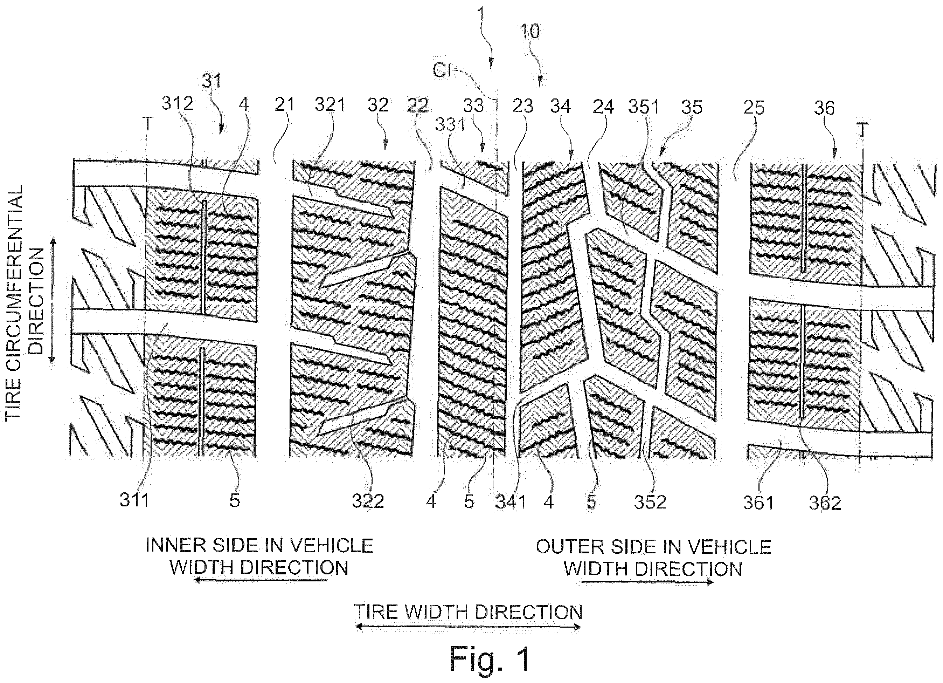

FIG. 1 is a plan view of a tread surface of the pneumatic tire according to the present embodiment. In FIG. 1, a reference sign CL denotes the tire equatorial plane, and reference signs T denote tire ground contact edges, respectively. Additionally, a pneumatic tire 1 according to the present embodiment (hereinafter, also referred to simply as "tire 1") is specified in the mounting direction with respect to the vehicle, and in the example of FIG. 1, it has a left-right asymmetric tread pattern centered on the tire equatorial plane CL. Note that in FIG. 1, a region illustrated on the outer side in the tire width direction of the ground contact edge T includes a so-called sidewall portion.

The ground contact edge T is defined as a maximum width position in the tire axial direction of a contact surface between the tire 1 and a flat plate when the tire 1 is mounted on a specified rim, inflated to a specified internal pressure, placed perpendicular to the flat plate in a static state, and loaded with a load corresponding to a specified load.

"Specified rim" refers to an "applicable rim" defined by the Japan Automobile Tire Manufacturers Association Inc. (JATMA), a "Design Rim" defined by the Tire and Rim Association, Inc. (TRA), or a "Measuring Rim" defined by the European Tyre and Rim Technical Organisation (ETRTO). Additionally, the specified internal pressure refers to a "maximum air pressure" specified by JATMA, the maximum value in "TIRE LOAD LIMITS AT VARIOUS COLD INFLATION PRESSURES" specified by TRA, or "INFLATION PRESSURES" specified by ETRTO. Additionally, the specified load refers to a "maximum load capacity" specified by JATMA, the maximum value in "TIRE LOAD LIMITS AT VARIOUS COLD INFLATION PRESSURES" specified by TRA, or "LOAD CAPACITY" specified by ETRTO. However, in the case of JATMA, for a tire for a passenger vehicle, the specified internal pressure is an air pressure of 180 kPa, and the specified load is 88% of the maximum load capacity.

A tread portion 10 of the tire 1 is made of a rubber material (tread rubber) and is exposed on the outermost side of the tire 1 in the tire radial direction, with the surface thereof constituting the contour of the tire 1. The surface of the tread portion 10 forms a tread surface that is a surface that comes into contact with the road surface when a vehicle (not illustrated) on which the tire 1 is mounted is driven.

The tire 1 includes, in the tread surface, a plurality of circumferential main grooves 21, 22, 23, 24, and 25 extending in the tire circumferential direction, a plurality of land portions 31, 32, 33, 34, 35, and 36 defined by the circumferential main grooves 21, 22, 23, 24, and 25, a plurality of lug grooves 311, 321, 322, 331, 351, and 361 disposed in each of the land portions 31, 32, 33, 34, 35, and 36, a plurality of sipes 4 disposed in each of the land portions 31 to 36, and narrow grooves 5 disposed in each of the land portions 31, 32, 33, 34, 35, and 36. Here, the circumferential main grooves 21, 22, 23, 24, and 25 refer to grooves extending in the tire circumferential direction and having a wear indicator as specified by JATMA mandatorily provided and typically have a groove width of 5.0 mm or more and a groove depth of 6.5 mm or more. The lug grooves 311, 321, 322, 331, 341, and 351 refer to lateral grooves extending in a direction intersecting the circumferential main grooves (tire width direction) and typically have a groove width of 1.0 mm or more and a groove depth of 3.0 mm or more. The sipes 4 refer to cuts formed in the tread surface 12 and typically have a sipe width of less than 1.0 mm and a sipe depth of 2.0 mm or more, thus closing when the tire comes into contact with the ground. The narrow grooves 5 are shallow grooves formed in the tread surface 12. The narrow grooves 5 have a shallower groove depth than the sipes 4. The narrow grooves 5 typically have a groove depth of 0.05 mm or more and 1.50 mm or less and a groove width of 0.10 mm or more and 0.80 mm or less, and a distance (pitch) between the adjacent narrow grooves 5 is 0.50 mm or more and 2.00 mm or less. As described above, the tire 1 according to the present embodiment is a studless tire provided with the sipes 4 and the narrow grooves 5 in the tread surface 12. The shapes of the sipes 4 and the narrow grooves 5 will be described later.

A plurality (five in FIG. 1) of circumferential main grooves 21, 22, 23, 24, and 25 extending in the tire circumferential direction is provided in the tread surface 12 at predetermined intervals in the tire width direction. In the present embodiment, as illustrated in FIG. 1, the circumferential main grooves 21, 22, 23, 24 and 25 are arranged in this order from an inner side in the vehicle width direction toward an outer side in the vehicle width direction. The circumferential main grooves 23 is a circumferential main groove closest to the tire equatorial plane CL. In the present embodiment, two circumferential main grooves 21, 22 are provided on an inner side in the vehicle width direction, and two circumferential main grooves 24, 25 are provided on an outer side in the vehicle width direction. Here, the inner side in the vehicle width direction and the outer side in the vehicle width direction are specified as orientations with respect to the vehicle width direction when the tire 1 is mounted on the vehicle. Further, two circumferential main grooves 21, 25 on the outermost side in the tire width direction are defined as shoulder main grooves, and three circumferential main grooves 22, 23, and 24 on the inner side in the tire width direction are defined as center main grooves.

In the example of FIG. 1, the circumferential main grooves 21, 25 that are the shoulder main grooves each have a straight shape where a groove width is not changed in the circumferential direction. Of the center main grooves, the circumferential main grooves 22, 24 are formed in a zigzag shape waving in the tire width direction while extending in the tire circumferential direction. Of the center main grooves, the circumferential main groove 23 has a straight shape. The circumferential main groove 22 that is the center main groove on the inner side in the vehicle width direction has a groove wall on a tire equatorial plane CL side having a straight shape where a position of the groove wall in the tire width direction is not changed but has a groove wall on a ground contact edge T side formed in a zigzag shape waving in the tire width direction while extending in the tire circumferential direction. Here, the number of circumferential main grooves 21, 22, 23, 24, and 25 is not limited to the above number, and four or less or six or more of circumferential main grooves may be disposed in the tread surface 12.

A plurality of (six rows in FIG. 1) land portions 31, 32, 33, 34, 35, and 36 extending in the tire circumferential direction is defined and formed on the tread surface 12 by the five circumferential main grooves 21, 22, 23, 24, and 25. In the present embodiment, the land portions 31, 36 respectively defined on the outer side in the tire width direction by the circumferential main grooves 21, 25 that are shoulder main grooves are defined as shoulder land portions. The land portion 32 defined by the circumferential main grooves 21 and the circumferential main groove 22 and the land portion 35 defined by the circumferential main groove 24 and the circumferential main groove 25, that is, land portions adjacent to the shoulder land portions 31, 36 on the inner side in the tire width direction via shoulder main grooves are defined as second land portions. The land portion 33 defined by the circumferential main grooves 22, 23 that are the center main grooves and the land portion 34 defined by the circumferential main grooves 22, 23 that are center main grooves are defined as center land portions. The land portions 33, 34 that are center land portions are provided in the vicinity of the tire equatorial plane CL.

In the example of FIG. 1, the land portions 33, 34 that are two center land portions are provided, but in a configuration with four circumferential main grooves, one center land portion is formed. In a configuration with three circumferential main grooves, the center land portion may also serve as the second land portion.

The land portions 31, 36 that are left and right shoulder land portions include a plurality of lug grooves 311, 361, respectively. The lug grooves 311, 361 have one ends respectively opening to the circumferential main grooves 21, 25 that are the shoulder main groove, extend on an outer side in the tire width direction, and have the other ends terminating in a region across the ground contact edge T. A plurality of lug grooves 311, 361 is provided repeatedly in the tire circumferential direction in the land portions 31, 36 that are shoulder land portions, respectively. Accordingly, the land portions 31, 36 that are the shoulder land portions include a plurality of blocks (shoulder blocks) defined by these lug grooves 311, 361, respectively. The plurality of sipes 4 and the plurality of narrow grooves 5 are formed in these respective blocks. Circumferential narrow grooves 312, 362 extend in the tire circumferential direction and have one ends in the circumferential direction respectively opening to the lug groove 311, 361 and the other ends terminating inside the blocks. The circumferential narrow groove 312 and the circumferential narrow groove 362 each have an end opening to the lug grooves on different sides in the tire circumferential direction.

The second land portion 32 on the inner side in the vehicle width direction includes two kinds of and a plurality of lug grooves 321, 322. The lug groove 321 (first lug groove) has one end facing one end of the lug groove 311 described above and opening to the shoulder main groove 21 and the other end terminating inside the second land portion 32. The lug groove 322 (second lug groove) has one end opening to the center main groove 22 and the other end terminating inside the second land portion 32. In the example of FIG. 1, one end of the lug groove 322 opens to a corner portion of the center main groove 22 having a zigzag shape projecting toward a ground contact edge T side. Accordingly, the lug grooves 321, 322 have a semi-closed structure that does not cross the second land portion 32. Further, these lug grooves 321, 322 are disposed in a staggered manner (alternately) in the tire circumferential direction, each extend inclined in the same direction of the tire circumferential direction, and overlap each other in the tire width direction. Accordingly, the second land portion 32 is formed as a rib that is continuous in the tire circumferential direction without being divided in the tire circumferential direction by the lug grooves 321, 322. The plurality of sipes 4 and the plurality of narrow grooves 5 are formed in the second land portion 32.

The land portion 33 that is the center land portion includes a plurality of lug grooves 331. Although FIG. 1 illustrates only one lug groove 331, the plurality of lug grooves 331 is formed in the tire circumferential direction. The lug groove 331 is formed extending in the tire width direction between the circumferential main grooves 22, 23 that are two center main grooves and has both respective ends opening to the circumferential main grooves 22, 23 that are the center main grooves. The land portion 33 that is the center land portion is defined into a plurality of blocks by the plurality of lug grooves 331, and the plurality of narrow grooves 332 and the plurality of sipes 4 are provided in each block.

The land portion 34 that is the center land portion includes a plurality of lug grooves 341. Although FIG. 1 illustrates only one lug groove 341, the plurality of lug grooves 341 is formed in the tire circumferential direction. The lug groove 341 is formed extending in the tire width direction between the circumferential main grooves 23, 24 that are two center main grooves and has both respective ends opening to the circumferential main grooves 23, 24 that are the center main grooves. In the example of FIG. 1, one end of the lug groove 341 opens to a corner portion of the circumferential main groove 24, that is the center main groove having a zigzag shape projecting toward the tire equatorial plane CL side and extends along an extension direction of a short length portion of the circumferential main groove 24 that is the center main groove. Further, the lug groove 341 is provided with respect to every other corner portion that forms the zigzag of the circumferential main groove 24 that is the center main groove. The land portion 34 that is the center land portion is defined into a plurality of blocks by the plurality of lug grooves 341, and the plurality of sipes 4 and the plurality of narrow grooves 5 are provided in each block.

The second land portion 35 on the outer side in the vehicle width direction includes a plurality of lug grooves 351 and a plurality of circumferential narrow grooves 352. The lug groove 341 is formed extending in the tire width direction between the center main groove 23 and the shoulder main groove 24 that are adjacent to each other and has one end opening to the center main groove 23 and the other end opening to the shoulder main groove 24. In the example of FIG. 1, one end of the lug groove 351 opens to a corner portion of the center main groove 24 having a zigzag shape projecting toward the ground contact edge T side, and the other end of the lug groove 351 is opposite to the one end of the lug groove 351 described above and opens to the shoulder main groove 25. The second land portion 35 is defined into a plurality of blocks by the plurality of lug grooves 341. In these blocks, in the example of FIG. 1, the circumferential narrow groove 352 is formed in a zigzag shape that waves in the tire width direction while extending in the tire circumferential direction. The circumferential narrow groove 352 is a narrow groove extending in the tire circumferential direction, and a groove width of the circumferential narrow groove 352 is 1.0 mm or more and 3.0 mm or less. Further, the plurality of sipes 4 and the plurality of narrow grooves 5 are formed in the second land portion 35.

Note that the pneumatic tire 1 according to the present embodiment has a meridian cross-section shape similar to that of a known pneumatic tire. Here, the meridian cross-section shape of the pneumatic tire refers to a cross-sectional shape of the pneumatic tire as it appears on a plane normal to the tire equatorial plane CL. The tire 1 according to the present embodiment has a bead portion, a sidewall portion, a shoulder portion, and a tread portion 10 from the inner side to the outer side in the tire radial direction in a tire meridian cross-sectional view, not illustrated. Further, in the tire meridian cross-sectional view, for example, the tire 1 includes a carcass layer extending from the tread portion 10 to the bead portions on both sides and wound around a pair of bead cores, and a belt layer and a belt reinforcing layer provided in that order on the above-described carcass layer on the outer side in the tire radial direction.

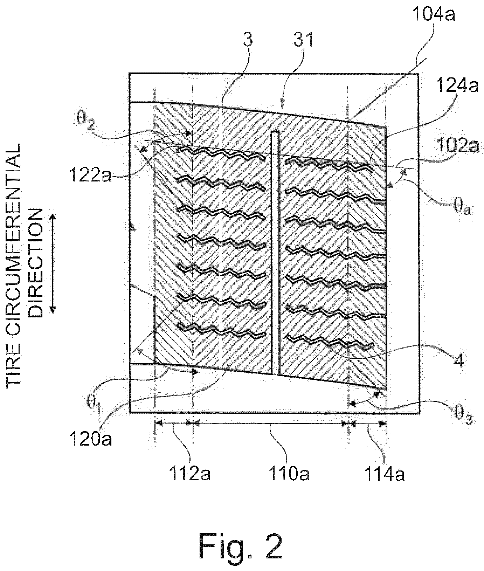

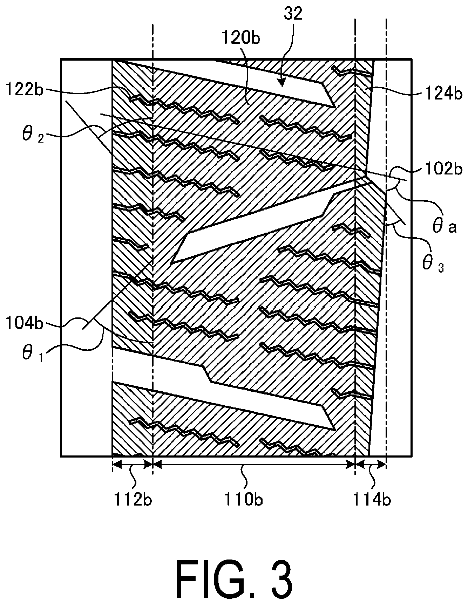

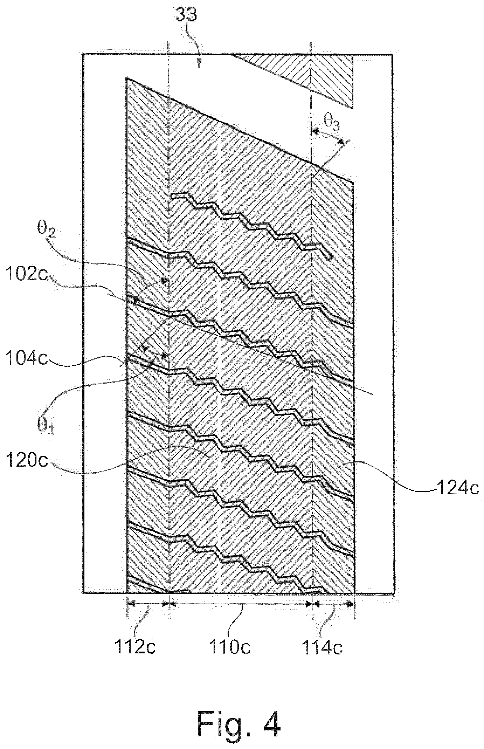

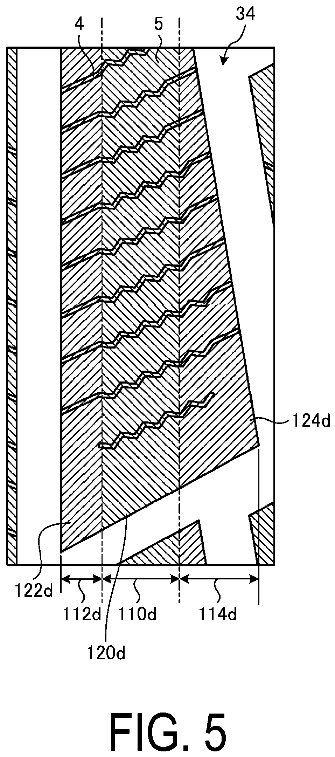

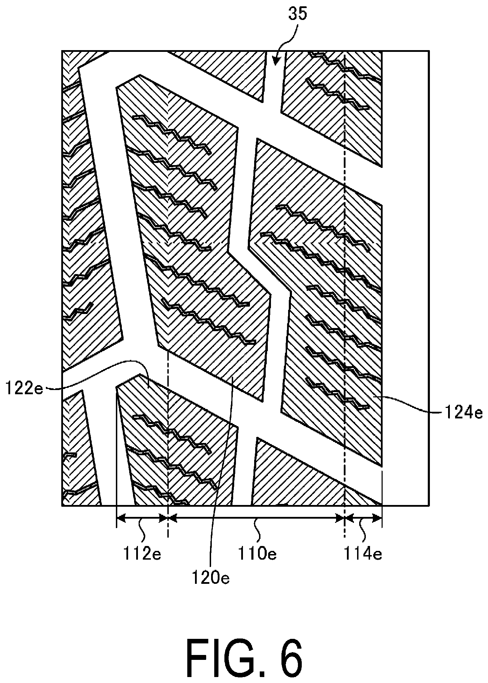

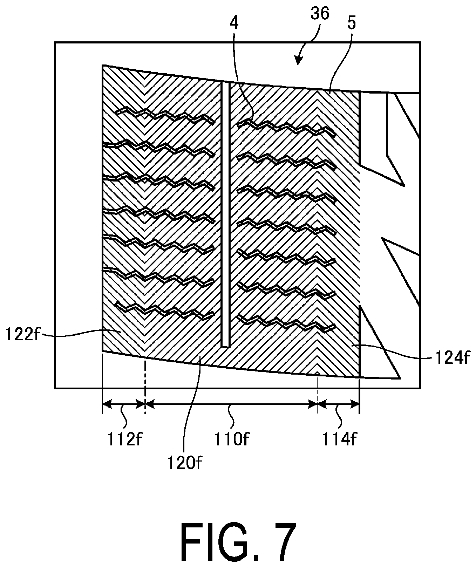

Next, the sipes 4 and the narrow grooves 5 formed in the land portions 31, 32, 33, 34, 35, and 36 are described. FIG. 2 is an enlarged view illustrating one shoulder land portion on the tread surface of the pneumatic tire according to the present embodiment. FIG. 3 is an enlarged view illustrating one second land portion on the tread surface of the pneumatic tire according to the present embodiment. FIG. 4 is an enlarged view illustrating one center land portion on the tread surface of the pneumatic tire according to the present embodiment. FIG. 5 is an enlarged view illustrating the other center land portion on the tread surface of the pneumatic tire according to the present embodiment. FIG. 6 is an enlarged view illustrating the other second land portion on the tread surface of the pneumatic tire according to the present embodiment. FIG. 7 is an enlarged view illustrating the other shoulder land portion on the tread surface of the pneumatic tire according to the present embodiment.

As described above, the land portion 31 illustrated in FIG. 2 is provided with the sipes 4 and the narrow grooves 5 formed in the tread surface. As illustrated in FIG. 2, the plurality of sipes 4 extends along the tire width direction and is provided side by side in the tire circumferential direction. The sipes 4 extend in a direction along a line segment 102a. The line segment 102a is inclined with respect to each of the tire circumferential direction and the tire width direction. Further, the sipes 4 are formed in a zigzag shape in which an opening portion to the tread surface 12 is continuously bent multiple times. For example, the line segment 102a is a line connecting vertices of corners on the same side of the zigzag shape in the tire circumferential direction. The sipes 4 may be two-dimensional sipes whose shape in the tread portion 10 from the tread surface 12 toward the inner side in the tire radial direction is a zigzag shape along the zigzag shape on the tread surface 12 or may be three-dimensional sipes further bent in addition to having the zigzag shape. An angle (inclination angle) formed by the sipes 4 and the tire circumferential direction is θa.

The narrow grooves 5 are grooves having a shallower groove depth than the sipes 4. A shape of a groove bottom portion of the narrow grooves 5 is not limited to a flat groove bottom, and the groove bottom portion may have a U shape or a V shape as viewed in a cross-sectional view, for example. As illustrated in FIG. 2, the plurality of narrow grooves 5 extends along the tire width direction and is provided side by side in the tire circumferential direction. The narrow grooves 5 formed in the land portion 31 includes narrow grooves 120a, 122a, and 124a. The narrow grooves 120a, 122a, and 124a are formed in different positions in the tire width direction. The narrow grooves 120a are formed in a central region 120a, that is a central portion of the land portion 31 in the tire width direction. The narrow grooves 122a are formed in an edge region 122a on an inner side in the vehicle width direction with respect to the central region 120a of the land portion 31. The narrow grooves 124a are formed in an edge region 124a on an outer side in the vehicle width direction with respect to the central region 120a of the land portion 31. The central region 120a contacts the edge regions 122a, 124a. The narrow grooves 120a have ends thereof on an inner side in the vehicle width direction connected to the narrow grooves 122a, and have ends thereof on an outer side in the vehicle width direction connected to the narrow grooves 124a.

Here, the narrow grooves 120a, the narrow grooves 122a, and the narrow grooves 124a have different inclination directions with respect to the tire circumferential direction and the tire width direction. That is, the narrow grooves 120a, the narrow grooves 122a, and the narrow grooves 124a have different directions extending in the tire circumferential direction when extending from the outer side toward the inner side in the vehicle width direction. An angle (inclination angle) formed by the narrow grooves 120a and the tire circumferential direction is θ1. An angle (inclination angle) formed by the narrow grooves 122a and the tire circumferential direction is θ2. An angle (inclination angle) formed by the narrow grooves 124a and the tire circumferential direction is θ3. The inclination angle θ2 and the inclination angle θ3 are the same angle.

The narrow grooves 120a and the sipes 4 have different inclination directions with respect to the tire circumferential direction and the tire width direction. That is, the narrow grooves 120a and the sipes 4 have different directions extending in the tire circumferential direction when extending from the outer side toward the inner side in the vehicle width direction. Further, the narrow grooves 122a, the narrow grooves 124a, and the sipes 4 have the same direction extending in the tire circumferential direction when extending from the outer side toward the inner side in the vehicle width direction.

As described above, the land portion 32 illustrated in FIG. 3 is provided with the sipes 4 and the narrow grooves 5 formed in the tread surface. The basic shapes of the sipes 4 and the narrow grooves 5 are similar to those in the land portion 31. The narrow grooves 5 formed in the land portion 32 include narrow grooves 120b, 122b, and 124b. The narrow grooves 120b, 122b, and 124b are formed in different positions in the tire width direction. The narrow grooves 120b are formed in a central region 120b, that is a central portion of the land portion 32 in the tire width direction. The narrow grooves 122b are formed in an edge region 122b on an inner side in the vehicle width direction with respect to the central region 120b of the land portion 32. The narrow grooves 124b are formed in an edge region 124b on an outer side in the vehicle width direction with respect to the central region 120b of the land portion 32. The central region 120b contacts the edge regions 122b, 124b. The narrow grooves 120b have ends thereof on an inner side in the vehicle width direction connected to the narrow grooves 122b, and have ends thereof on an outer side in the vehicle width direction connected to the narrow grooves 124b.

Here, the narrow grooves 120b, the narrow grooves 122b, and the narrow grooves 124b have different inclination directions with respect to the tire circumferential direction and the tire width direction. That is, the narrow grooves 120b, the narrow grooves 122b, and the narrow grooves 124b have different directions extending in the tire circumferential direction when extending from the outer side toward the inner side in the vehicle width direction. An angle (inclination angle) formed by the narrow grooves 120b and the tire circumferential direction is θ1. An angle (inclination angle) formed by the narrow grooves 122b and the tire circumferential direction is θ2. An angle (inclination angle) formed by the narrow grooves 124b and the tire circumferential direction is θ3. The inclination angle θ2 and the inclination angle θ3 are the same angle.

The narrow grooves 120b and the sipes 4 have different inclination directions with respect to the tire circumferential direction and the tire width direction. That is, the narrow grooves 120b and the sipes 4 have different directions extending in the tire circumferential direction when extending from the outer side toward the inner side in the vehicle width direction. Further, the narrow grooves 122b, the narrow grooves 124b, and the sipes 4 have the same direction extending in the tire circumferential direction when extending from the outer side toward the inner side in the vehicle width direction.

As described above, the land portion 33 illustrated in FIG. 4 is provided with the sipes 4 and the narrow grooves 5 formed in the tread surface. The basic shapes of the sipes 4 and the narrow grooves 5 are similar to those in the land portion 31. The narrow grooves 5 formed in the land portion 33 include narrow grooves 120c, 122c, and 124c. The narrow grooves 120c, 122c, and 124c are formed in different positions in the tire width direction. The narrow grooves 120c are formed in a central region 120c, that is a central portion of the land portion 33 in the tire width direction. The narrow grooves 122c are formed in an edge region 122c on the inner side in the vehicle width direction with respect to the central region 120c of the land portion 33. The narrow grooves 124c are formed in an edge region 124c on the outer side in the vehicle width direction with respect to the central region 120c of the land portion 33. The central region 120c contacts the edge regions 122c, 124c. The narrow grooves 120c have ends thereof on an inner side in the vehicle width direction connected to the narrow grooves 122c, and have ends thereof on an outer side in the vehicle width direction connected to the narrow grooves 124c.

Here, the narrow grooves 120c, the narrow grooves 122c, and the narrow grooves 124c have different inclination directions with respect to the tire circumferential direction and the tire width direction. That is, the narrow grooves 120c, the narrow grooves 122c, and the narrow grooves 124c have different directions extending in the tire circumferential direction when extending from the outer side toward the inner side in the vehicle width direction. Here, an angle (inclination angle) formed by the narrow grooves 120c and the tire circumferential direction is θ1. An angle (inclination angle) formed by the narrow grooves 122c and the tire circumferential direction is θ2. An angle (inclination angle) formed by the narrow grooves 124c and the tire circumferential direction is θ3. The inclination angle θ2 and the inclination angle θ3 are the same angle.

The narrow grooves 120c and the sipes 4 have different inclination directions with respect to the tire circumferential direction and the tire width direction. That is, the narrow grooves 120c and the sipes 4 have different directions extending in the tire circumferential direction when extending from the outer side toward the inner side in the vehicle width direction. Further, the narrow grooves 122c, the narrow grooves 124a, and the sipes 4 have the same direction extending in the tire circumferential direction when extending from the outer side toward the inner side in the vehicle width direction.

As described above, the land portion 34 illustrated in FIG. 5 is provided with the sipes 4 and the narrow grooves 5 formed in the tread surface. The basic shapes of the sipes 4 and the narrow grooves 5 are similar to those in the land portion 31. The narrow grooves 5 formed in the land portion 34 include narrow grooves 120d, 122d, and 124d. The narrow grooves 120d, 122d, and 124d are formed in different positions in the tire width direction. The narrow grooves 120d are formed in a central region 120d, that is a central portion of the land portion 34 in the tire width direction. The narrow grooves 122d are formed in an edge region 122d on the inner side in the vehicle width direction with respect to the central region 120d of the land portion 34. The narrow grooves 124d are formed in an edge region 124d on the outer side in the vehicle width direction with respect to the central region 120d of the land portion 34. The central region 120d contacts the edge regions 122d, 124d. The narrow grooves 120d have ends thereof on an inner side in the vehicle width direction connected to the narrow grooves 122d, and have ends thereof on an outer side in the vehicle width direction connected to the narrow grooves 124d.

Here, the narrow grooves 120d, the narrow grooves 122d, and the narrow grooves 124d have different inclination directions with respect to the tire circumferential direction and the tire width direction. That is, the narrow grooves 120d, the narrow grooves 122d, and the narrow grooves 124d have different directions extending in the tire circumferential direction when extending from the outer side toward the inner side in the vehicle width direction. Here, an angle (inclination angle) formed by the narrow grooves 120d and the tire circumferential direction is θ1. An angle (inclination angle) formed by the narrow grooves 122d and the tire circumferential direction is θ2. An angle (inclination angle) formed by the narrow grooves 124d and the tire circumferential direction is θ3. The inclination angle θ2 and the inclination angle θ3 are the same angle.

The narrow grooves 120d and the sipes 4 have different inclination directions with respect to the tire circumferential direction and the tire width direction. That is, the narrow grooves 120d and the sipes 4 have different directions extending in the tire circumferential direction when extending from the outer side toward the inner side in the vehicle width direction. Further, the narrow grooves 122d, the narrow grooves 124d, and the sipes 4 have the same direction extending in the tire circumferential direction when extending from the outer side toward the inner side in the vehicle width direction.

As described above, the land portion 35 illustrated in FIG. 6 is provided with the sipes 4 and the narrow grooves 5 formed in the tread surface. The basic shapes of the sipes 4 and the narrow grooves 5 are similar to those in the land portion 31. The narrow grooves 5 formed in the land portion 35 include narrow grooves 120e, 122e, and 124e. The narrow grooves 120e, 122e, and 124e are formed in different positions in the tire width direction. The narrow grooves 120e are formed in a central region 120e that is a central portion of the land portion 35 in the tire width direction. The narrow grooves 122e are formed in an edge region 122e on the inner side in the vehicle width direction with respect to the central region 120e of the land portion 35. The narrow grooves 124e are formed in an edge region 124e on the outer side in the vehicle width direction with respect to the central region 120e of the land portion 35. The central region 120e contacts the edge regions 122e, 124e. The narrow grooves 120e have ends thereof on an inner side in the vehicle width direction connected to the narrow grooves 122e, and have ends thereof on an outer side in the vehicle width direction connected to the narrow grooves 124e.

Here, the narrow grooves 120e, the narrow grooves 122e, and the narrow grooves 124e have different inclination directions with respect to the tire circumferential direction and the tire width direction. That is, the narrow grooves 120e, the narrow grooves 122e, and the narrow grooves 124e have different directions in the tire circumferential direction when extending from the outer side toward the inner side in the vehicle width direction. Here, an angle (inclination angle) formed by the narrow grooves 120e and the tire circumferential direction is θ1. An angle (inclination angle) formed by the narrow grooves 122e and the tire circumferential direction is θ2. An angle (inclination angle) formed by the narrow grooves 124e and the tire circumferential direction is θ3. The inclination angle θ2 and the inclination angle θ3 are the same angle.

The narrow grooves 120e and the sipes 4 have different inclination directions with respect to the tire circumferential direction and the tire width direction. That is, the narrow grooves 120e and the sipes 4 have different directions extending in the tire circumferential direction when extending from the outer side toward the inner side in the vehicle width direction. Further, the narrow grooves 122e, the narrow grooves 124e, and the sipes 4 have the same direction extending in the tire circumferential direction when extending from the outer side toward the inner side in the vehicle width direction.

As described above, the land portion 36 illustrated in FIG. 7 is provided with the sipes 4 and the narrow grooves 5 formed on the tread surface. The basic shapes of the sipes 4 and the narrow grooves 5 are similar to those in the land portion 31. The narrow grooves 5 formed in the land portion 36 include narrow grooves 120f, 122f, and 124f. The narrow grooves 120f, 122f, and 124f are formed in different positions in the tire width direction. The narrow grooves 120f are formed in a central region 120f, that is a central portion of the land portion 36 in the tire width direction. The narrow grooves 122f are formed in an edge region 122f on the inner side in the vehicle width direction with respect to the central region 120f of the land portion 36. The narrow grooves 124f are formed in an edge region 124f on the outer side in the vehicle width direction with respect to the central region 120f of the land portion 36. The central region 120f contacts the edge regions 122f, 124f. The narrow grooves 120f have ends thereof on an inner side in the vehicle width direction connected to the narrow grooves 122f, and have ends thereof on an outer side in the vehicle width direction connected to the narrow grooves 124f.

Here, the narrow grooves 120f, the narrow grooves 122f and the narrow grooves 124f have different inclination directions with respect to the tire circumferential direction and the tire width direction. That is, the narrow grooves 120f, the narrow grooves 122f, and the narrow grooves 124f have different directions extending in the tire circumferential direction when extending from the outer side toward the inner side in the vehicle width direction. Here, an angle (inclination angle) formed by the narrow grooves 120f and the tire circumferential direction is θ1. An angle (inclination angle) formed by the narrow grooves 122f and the tire circumferential direction is θ2. An angle (inclination angle) formed by the narrow grooves 124f and the tire circumferential direction is θ3. The inclination angle θ2 and the inclination angle θ3 are the same angle.

The narrow grooves 120f and the sipes 4 have different inclination directions with respect to the tire circumferential direction and the tire width direction. That is, the narrow grooves 120f and the sipes 4 have different directions extending in the tire circumferential direction when extending from the outer side toward the inner side in the vehicle width direction. Further, the narrow grooves 122f, the narrow grooves 124f, and the sipes 4 have the same direction extending in the tire circumferential direction when extending from the outer side toward the inner side in the vehicle width direction.

As described above, all of the land portions 31, 32, 33, 34, 35, and 36 are formed with the sipes 4 and the narrow grooves 5. Further, among the narrow grooves 5, the narrow grooves 120a, 120b, 120c, 120d, 120e, and 120f in the central region and the narrow grooves 122a, 122b, 122c, 122d, 122e, 122f, 124a, 124b, 124c, 124d, 124e, and 124f in the edge regions have opposite directions extending in the tire circumferential direction when extending from one side toward the other side in the tire width direction (hereinafter, also referred to as "have opposite inclination directions"). Further, the sipes 4 and the narrow grooves 120a, 120b, 120c, 120d, 120e, and 120f in the central region have opposite directions in the tire circumferential direction when extending from one side toward the other side in the tire width direction. Further, the sipes 4, the narrow grooves 122a, 122b, 122c, 122d, 122e, 122f, 124a, 124b, 124c, 124d, 124e, and 124f in the edge regions have the same direction extending in the tire circumferential direction when extending from one side toward the other side in the tire width direction (hereinafter, also referred to as "have the same inclination direction").

The tire 1 has a shape having opposite inclination directions of the narrow grooves 5 in the central region and the edge regions, opposite inclination directions of the narrow grooves and the sipes in the central region, and the same inclination direction of the narrow grooves and the sipes in the edge regions. This can improve both the braking performance on ice and the running performance on snow. Specifically, making the inclination directions of the sipes 4 and the narrow grooves 5 in the central regions 110a, 110b, 110c, 110d, 110e and 110f opposite to each other to make the sipes 4 and the narrow grooves 5 intersect each other allows the edge effect of gripping the ground to be increased and slipping on ice to be reduced. Further, making the inclination directions of the sipes 4 and the narrow grooves 5 in the edge regions 112a, 112b, 112c, 112d, 112e, 112f, 114a, 114b, 114c, 114d, 114e, and 114f the same allows snow entering the sipes 4 and the narrow grooves 5 to be pushed out toward the circumferential main groove side and the performance on snow to be improved.

In the tire 1 according to the present embodiment, the sipes 4 and the narrow grooves 5 are formed in all of the land portions 31, 32, 33, 34, 35, and 36 and in a shape satisfying the relationship described above. This can improve both the braking performance on ice and the running performance on snow. Further, with respect to the tire 1 according to the present embodiment, in a case where the land portion is divided in the circumferential direction by the lug grooves thus being formed in a block shape as such land portions 31, 33, 34, 35, and 36, the tire 1 is formed to satisfy the relationship described above and hence, both the braking performance on ice and the running performance on snow can be improved. When the sipes 4 and the narrow grooves 5 of all of the land portions of the land portions 31, 32, 33, 34, 35, and 36 satisfy the relationship described above, the tire 1 more suitably acquires the above-described effects. However, forming at least one middle land portion as a specific land portion that satisfies the relationship described above allows both the braking performance on ice and the running performance on snow to be improved. Here, the middle land portion is a land portion including land portions disposed on both sides in the tire width direction. That is, the middle land portion is a land portion where another land portion is disposed on outer sides of the land portion in the tire width direction.

Here, when the widths of the land portions 31, 32, 33, 34, 35, and 36 in the tire width direction are 100%, the widths of the central regions 110a, 110b, 110c, 110d, 110e, and 110f are preferably 60% or more and 80% or less. Similarly, when the widths of the land portions 31, 32, 33, 34, 35, and 36 in the tire width direction are 100%, the widths of the edge regions 112a, 112b, 112c, 112d, 112e, 112f, 114a, 114b, 114c, 114d, 114e, and 114f are preferably 20% or more and 40% or less. Setting the widths of the central region and the edge regions of the land portion to be within the range described above allows the resistance to slip due to the edge effect to be increased to improve the braking performance on ice and snow sticking to be favorably suppressed. This can improve both the braking performance on ice and the running performance on snow.

Further, an inclination angle θa of the sipes 4 with respect to the tire circumferential direction (an extension direction of the circumferential main groove) is preferably 45° or more and 80° or less and more preferably 55° or more and 80°C or less. Setting the angle of the sipe to be within the range described above can suppress clogging while maintaining the edge function of the sipes 4.

Further, the inclination angle θ1 of the narrow grooves 5 with respect to the tire circumferential direction (the extension direction of the circumferential main groove) in the central region is preferably 40° or more and 65° or less and more preferably 45°. Setting the angle of the narrow grooves 5 to be within the range described above an suppress clogging while maintaining the edge function of the narrow groove.

Further, the inclination angles θ2, θ3 of the narrow grooves 5 with respect to the tire circumferential direction (the extension direction of the circumferential main groove) in the edge regions are preferably 50° or more and 80° or less and more preferably 70°. Setting the angle of the narrow grooves 5 to be within the above-mentioned range can suppress clogging while maintaining the edge function of the narrow groove.

As described above, the narrow grooves 5 preferably have a groove depth of 0.05 mm or more and 1.50 mm or less, a groove width of 0.10 mm or more and 0.80 mm or less, and a distance (pitch) between the adjacent narrow grooves 5 is preferably 0.50 mm or more and 2.00 mm or less. Setting the shape of the narrow grooves 5 to be within the range described above allows the lowering of the braking performance on ice and the running performance on snow to be suppressed and the lowering the braking performance on ice due to reduction of the ground contact area and the lowering of the block rigidity to be suppressed.

Here, the narrow grooves 5 are preferably formed such that an end of the narrow grooves 5 in the central region is preferably connected to an end of the narrow grooves 5 in the edge regions. That is, the narrow grooves 5 preferably have a shape connecting from one end to the other end of the land portion in the tire width direction. Connecting the narrow grooves in the central region to the narrow grooves in the edge regions allows the water removal effect to be improved, the braking performance on ice and the running performance on snow to be further improved, and particularly, the braking performance on ice and the running performance on snow to be further improved in an environment of high ice temperature.

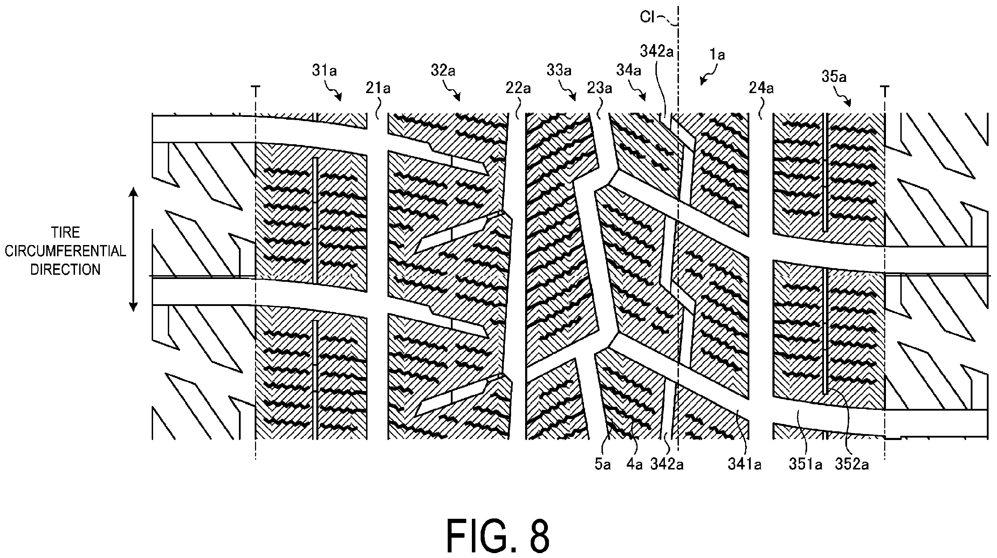

FIG. 8 is a plan view illustrating a tread surface of a pneumatic tire 1a according to another embodiment. A plurality (four in FIG. 1) of circumferential main grooves 21a, 22a, 23a, and 24a extending in the tire circumferential direction is provided on a tread surface at predetermined intervals in the tire width direction. In the present embodiment, as illustrated in FIG. 8, the circumferential main grooves 21a, 22a, 23a, and 24a are arranged in this order from an inner side in the vehicle width direction toward an outer side in the vehicle width direction. Further, in the present embodiment, two circumferential main grooves 21a, 22a are provided on an inner side in the vehicle width direction, and two circumferential main grooves 23a, 24a are provided on an outer side in the vehicle width direction. Here, the inner side in the vehicle width direction and the outer side in the vehicle width direction are specified as orientations with respect to the vehicle width direction when the tire 1 is mounted on the vehicle. Further, two circumferential main grooves 21a, 24a on the outermost side in the tire width direction are defined as shoulder main grooves, and two circumferential main grooves 22a, 23a on the inner side in the tire width direction are defined as center main grooves.

On the tread surface, a plurality of (five rows in FIG. 8) land portions 31a, 32a, 33a, 34a, and 35a extending in the tire circumferential direction is defined by the four circumferential main grooves 21a, 22a, 23a, and 24a. The tread surface according to the present embodiment does not provide the land portion 33 on the tread surface.

The tread surface also can acquire the effect described above by forming sipes 4 and narrow grooves 5 that satisfy the relationship described above in the land portions 31a, 32a, 33a, 34a, and 35a.

### Examples

Next, as an example, the results of performance tests of tires according to the present embodiment are shown. In the performance tests, a plurality of types of test tires was evaluated on the braking performance on ice and the running performance on snow. Further, with respect to the tires of the example, test tires having a tire size of 195/65R15 91Q were assembled on specified rims having a rim size of 15×6.5J, and a specified air pressure was applied to the test tires. Further, the test tires were mounted on all wheels of a test vehicle being a frontengine front-drive (FF) vehicle with an engine displacement of 1800 cc. Each tire is filled with air at an air pressure of 250/240 kPa.

With respect to the indoor braking performance on ice, the braking test (20 km/h) was performed by the test driver on the skate rink. Then, on the basis of the test results, the evaluation is expressed as index values with the value of conventional example being assigned the reference 100. In the evaluation, larger index values indicate shorter braking distance and superior indoor braking performance on ice.

With respect to the outdoor braking performance on ice, the braking test (20 km/h) was performed by the test driver on the outdoor ice board road. Then, on the basis of the test results, the evaluation is expressed as index values with the value of conventional example being assigned the reference 100. In the evaluation, larger index values indicate shorter braking distance and superior outdoor braking performance on ice.

With respect to the running performance on snow, the running test (10 km run) was performed by the test driver on the outdoor snow covered road. Then, on the basis of the test results, the evaluation is expressed as index values with the value of conventional example being assigned the reference 100. In the evaluation, larger index values indicate lower fuel consumption during travel, more favorable braking operation during travel, and superior running performance on snow.

The performance evaluation tests were performed on a tire according to the conventional example as an example of a known tire, and a plurality of types of pneumatic tires according to the examples. All of these tires of the conventional example and the examples are provided with the sipes and the narrow grooves in the tread surface of the land portion. The conventional example of these tires has the same inclination direction of the sipes and the narrow grooves. Further, as a comparative example, the test was also performed on a tire having the opposite inclination directions of the sipes and the narrow grooves only in the shoulder land portion.

All of the tires of the examples have the opposite inclination directions of the sipes and the narrow grooves. Further, the tires of the examples are tires varying in the position of the land portion that satisfies the illustrated shape, the inclination angle of the sipe, the inclination angle of the narrow groove, a ratio between the central region and the edge regions on the tread surface of the land portion, various sizes of the narrow grooves, and the presence of the connection of the narrow grooves in the central region and the edge region.

The results of performing the performance evaluation tests using these tires are shown in Table 1.

**[Table 1]**

| Table 1-1 | | | | | | |
|---|---|---|---|---|---|---|
| | Conventional Example | Comparative Example | Example 1 | Example 2 | Example 3 | Example 4 |
| Inclination direction of sipe and narrow groove | Same direction | Opposite direction | Opposite direction | Opposite direction | Opposite direction | Opposite direction |
| Position of land portion | All | Only shoulder | One center | All | All, no block | All |
| Ratio of length of central region (%) | 70 | 70 | 70 | 70 | 70 | 50 |
| Ratio of length of edge region (%) | 30 | 30 | 30 | 30 | 30 | 50 |
| Inclination angle of sipe (°) | 65 | 65 | 65 | 65 | 65 | 65 |
| Inclination angle of narrow groove in central region (°) | 45 | 45 | 45 | 45 | 45 | 45 |
| Inclination angle of narrow groove in edge region (°) | 70 | 70 | 70 | 70 | 70 | 70 |
| Groove depth of narrow groove (mm) | 0.2 | 0.2 | 0.2 | 0.2 | 0.2 | 0.2 |
| Groove width of narrow groove (mm) | 0.3 | 0.3 | 0.3 | 0.3 | 0.3 | 0.3 |
| Pitch width between adjacent narrow grooves (mm) | 1.2 | 1.2 | 1.2 | 1.2 | 1.2 | 1.2 |
| Presence of connection of narrow grooves in central region and edge region | Yes | Yes | Yes | Yes | Yes | Yes |
| Indoor braking performance on ice (index value) | 100 | 103 | 102 | 105 | 106 | 102 |
| Outdoor braking performance on ice (index value) | 100 | 103 | 102 | 105 | 104 | 107 |
| Running performance on snow (index value) | 100 | 103 | 103 | 104 | 100 | 106 |

| Table 1-2 | | | | | | | |
|---|---|---|---|---|---|---|---|
| | Example 5 | Example 6 | Example 7 | Example 8 | Example 9 | Example 10 | Example 11 |
| Inclination direction of sipe and narrow groove | Opposite direction | Opposite direction | Opposite direction | Opposite direction | Opposite direction | Opposite direction | Opposite direction |
| Position of land portion | All | All | All | All | All | All | All |
| Ratio of length of central region (%) | 70 | 70 | 70 | 70 | 70 | 70 | 70 |
| Ratio of length of edge region (%) | 30 | 30 | 30 | 30 | 30 | 30 | 30 |
| Inclination angle of sipe (°) | 40 | 45 | 85 | 65 | 65 | 65 | 65 |
| Inclination angle of narrow groove in central region (°) | 35 | 35 | 45 | 45 | 45 | 45 | 45 |
| Inclination angle of narrow groove in edge region (°) | 60 | 60 | 60 | 45 | 85 | 70 | 70 |
| Groove depth of narrow groove (mm) | 0.2 | 0.2 | 0.2 | 0.2 | 0.2 | 1.5 | 0.2 |
| Groove width of narrow groove (mm) | 0.3 | 0.3 | 0.3 | 0.3 | 0.3 | 1.0 | 0.3 |
| Pitch width between adjacent narrow grooves (mm) | 1.2 | 1.2 | 1.2 | 1.2 | 1.2 | 1.0 | 1.2 |
| Presence of connection of narrow grooves in central region and edge region | Yes | Yes | Yes | Yes | Yes | Yes | No |
| Indoor braking performance on ice (index value) | 102 | 103 | 104 | 105 | 104 | 101 | 104 |
| Outdoor braking performance on ice (index value) | 102 | 103 | 103 | 105 | 104 | 103 | 104 |
| Running performance on snow (index value) | 102 | 103 | 104 | 102 | 105 | 104 | 106 |

It was found that the tires according to the examples can provide improved braking performance on ice and running performance on snow compared to the conventional example. That is, the tires according to the examples can provide the braking performance on ice and the running performance on snow in a compatible manner.

While the embodiments of the present invention have been described above, the present invention is not limited to the embodiments described above. For example, in the embodiment described above, a pneumatic tire has been described as an example of a tire but is not limited to the pneumatic tire, and the embodiment can naturally be applied to a tire that is not filled with air, such as an airless tire. A gas to be filled in the pneumatic tire illustrated in the embodiment described above may be an inert gas such as nitrogen, argon, and helium in addition to ordinary air or air with an adjusted oxygen partial pressure.

### Reference Signs List

1, 1a Tire (pneumatic tire)
4, 102 Sipe
10 Tread portion
12, 12a Tread surface
21, 25 Shoulder main groove (circumferential main groove)
22, 23, 24 Center main groove (circumferential main groove)
31, 36 Shoulder land portion (land portion)
32, 35 Second land portion (land portion)
33, 34 Center land portion (land portion)
311, 321, 322, 331, 341, 351, 361 Lug groove
312, 323, 332, 342, 352 Narrow groove
104 Bent portion
A1 Central region
A2 Edge region
AC Cross line
BA, BB, BC Block
CL Tire equatorial plane
L1 Groove depth
L2 Groove width
L3 Pitch
R Ground contact surface
T Ground contact edge

## Claims

1. A tire (1, 1a), comprising:
in a tread portion (10), a plurality of circumferential main grooves (21, 22, 23, 24, 25) extending in a tire circumferential direction;
a plurality of lug grooves (311, 321, 322, 331, 341, 351, 361) extending in a direction intersecting the circumferential main grooves; and
a plurality of land portions (31, 32, 33, 34, 35, 36) defined by the circumferential main grooves and arranged in the direction intersecting the circumferential main grooves;
a specific land portion (31, 32, 33, 34, 35, 36) that is at least one of the land portions, comprising:
in a ground contact surface, a plurality of sipes (4) extending in the direction intersecting the circumferential main grooves; and
a plurality of narrow grooves (5) extending in the direction intersecting the circumferential main grooves and having a groove depth of 1.50 mm or less;
in a central region (110a-f) in the tire width direction, the sipes (4) and the narrow grooves (5, 120a-f) have different directions extending in the tire circumferential direction when extending from one side toward another side in the tire width direction,
in both edge regions (112a-f, 114a-f) on an outer side from the central region (110a-f) in the tire width direction, the sipes (4) and the narrow grooves (5, 122a-f, 124a-f) have the same direction extending in the tire circumferential direction when extending from the one side toward the other side in the tire width direction; and
the specific land portion (31, 32, 33, 34, 35, 36) comprising a land portion including at least one land portion (31, 36) on an outer side in the tire width direction defined as a side away from the tire equatorial plane (CL) in the tire width direction,
**characterized by**
the plurality of narrow grooves (5) extending without intersecting each other.

2. The tire according to claim 1, wherein the specific land portion includes a plurality of blocks defined by the circumferential main grooves and the lug grooves.

3. The tire according to claim 1 or 2, wherein a length of the specific land portion in the direction intersecting the circumferential main grooves is regarded as 100%, and a length of the central region (110a-f) in the direction intersecting the circumferential main grooves is 60% or more and 80% or less.

4. The tire according to any one of claims 1 to 3, wherein the sipes have an inclination angle with respect to the tire circumferential direction of 45° or more and 80° or less.

5. The tire according to any one of claims 1 to 4, wherein the narrow grooves (5, 120a-f) have an inclination angle (θ1) with respect to the tire circumferential direction in the central region (110a-f) of 40° or more and 65° or less.

6. The tire according to any one of claims 1 to 5, wherein the narrow grooves (5, 122a-f, 124a-f) have an inclination angle (θ2, θ3) with respect to the tire circumferential direction in the edge regions (112a-f, 114a-f) of 50° or more and 80° or less.

7. The tire according to any one of claims 1 to 6, wherein the narrow grooves (5) have a groove depth of 0.05 mm or more and 1.50 mm or less and a groove width of 0.10 mm or more and 0.80 mm or less, and a distance between the narrow grooves (5) adjacent to each other is 0.50 mm or more and 2.00 mm or less.

8. The tire according to any one of claims 1 to 7, wherein an end of the narrow grooves (5, 122a-f, 124a-f) in the central region (110a-f) is connected to an end of the narrow grooves (5, 122a-f, 124a-f) in the edge regions (112a-f, 114a-f).

## Patentansprüche

1. Reifen (1, 1a), umfassend:
in einem Laufflächenabschnitt (10) eine Mehrzahl von Hauptumfangsrillen (21, 22, 23, 24, 25), die sich in einer Reifenumfangsrichtung erstrecken;
eine Mehrzahl von Stollenrillen (311, 321, 322, 331, 341, 351, 361), die sich in einer Richtung erstrecken, die sich mit den Hauptumfangsrillen überschneidet; und
eine Mehrzahl von Stegabschnitten (31, 32, 33, 34, 35, 36), die durch die Hauptumfangsrillen definiert sind und in der Richtung angeordnet sind, die sich mit den Hauptumfangsrillen überschneidet;
einen bestimmten Stegabschnitt (31, 32, 33, 34, 35, 36), der mindestens einer der Stegabschnitte ist, umfassend:
in einer Bodenkontaktoberfläche eine Mehrzahl von Lamellen (4), die sich in der Richtung erstrecken, die sich mit den Hauptumfangsrillen überschneidet; und
eine Mehrzahl von schmalen Rillen (5), die sich in der Richtung erstrecken, in der sie sich mit den Hauptumfangsrillen überschneiden, und eine Rillentiefe von 1,50 mm oder weniger aufweisen;
wobei in einem mittleren Bereich (110a-f) in Reifenbreitenrichtung die Lamellen (4) und die schmalen Rillen (5, 120a-f) unterschiedliche Richtungen aufweisen, die sich in Reifenumfangsrichtung erstrecken, wenn sie sich von einer Seite zu einer anderen Seite in Reifenbreitenrichtung erstrecken,
wobei in beiden Randbereichen (112a-f, 114a-f) auf einer Außenseite von dem mittleren Bereich (110a-f) in Reifenbreitenrichtung die Lamellen (4) und die schmalen Rillen (5, 122a-f, 124a-f) die gleiche Richtung aufweisen, die sich in Reifenumfangsrichtung erstreckt, wenn sie sich von der einen Seite zu der anderen Seite in Reifenbreitenrichtung erstrecken; und
der spezifische Stegabschnitt (31, 32, 33, 34, 35, 36) umfassend einen Stegabschnitt, der mindestens einen Stegabschnitt (31, 36) auf einer Außenseite in Reifenbreitenrichtung umfasst, die als eine von der Äquatorialebene (CL) des Reifens in Reifenbreitenrichtung abgewandte Seite definiert ist,
**dadurch gekennzeichnet, dass**
sich die Mehrzahl von schmalen Rillen (5) erstreckt, ohne sich zu überschneiden.

2. Reifen gemäß Anspruch 1, wobei der bestimmte Stegabschnitt eine Mehrzahl von Blöcken umfasst, die durch die Hauptumfangsrillen und die Stollenrillen definiert sind.

3. Reifen gemäß Anspruch 1 oder 2, wobei eine Länge des bestimmten Stegabschnitts in der Richtung, die sich mit den Hauptumfangsrillen überschneidet, als 100 % angesehen wird, und eine Länge des mittleren Bereichs (100a-f) in der Richtung, die sich mit den Hauptumfangsrillen überschneidet, 60 % oder mehr und 80 % oder weniger beträgt.

4. Reifen gemäß einem der Ansprüche 1 bis 3, wobei die Lamellen einen Neigungswinkel in Bezug auf die Reifenumfangsrichtung von 45° oder mehr und 80° oder weniger aufweisen.

5. Reifen gemäß einem der Ansprüche 1 bis 4, wobei die schmalen Rillen (5, 120a-f) einen Neigungswinkel (θ1) in Bezug auf die Reifenumfangsrichtung in dem mittleren Bereich (110a-f) von 40° oder mehr und 65° oder weniger aufweisen.

6. Reifen gemäß einem der Ansprüche 1 bis 5, wobei die schmalen Rillen (5, 122a-f, 124a-f) einen Neigungswinkel (θ2, θ3) in Bezug auf die Reifenumfangsrichtung in den Randbereichen (112a-f, 114a-f) von 50° oder mehr und 80° oder weniger aufweisen.

7. Reifen gemäß einem der Ansprüche 1 bis 6, wobei die schmalen Rillen (5) eine Rillentiefe von 0,05 mm oder mehr und 1,50 mm oder weniger und eine Rillenbreite von 0,10 mm oder mehr und 0,80 mm oder weniger aufweisen und ein Abstand zwischen den schmalen Rillen (5), die aneinander angrenzen, 0,50 mm oder mehr und 2,00 mm oder weniger beträgt.

8. Reifen gemäß einem der Ansprüche 1 bis 7, wobei ein Ende der schmalen Rillen (5, 122a-f, 124a-f) in dem mittleren Bereich (100a-f) mit einem Ende der schmalen Rillen (5, 122a-f, 124a-f) in den Randbereichen (112a-f, 114a-f) verbunden ist.

## Revendications

1. Pneu (1, 1a), comprenant :
dans une partie de bande de roulement (10), une pluralité de rainures principales circonférentielles (21, 22, 23, 24, 25) s'étendant dans une direction circonférentielle de pneu ;
une pluralité de rainures de barrette (311, 321, 322, 331, 341, 351, 361) s'étendant dans une direction croisant les rainures principales circonférentielles ; et
une pluralité de parties terrestres (31, 32, 33, 34, 35, 36) définies par les rainures principales circonférentielles et agencées dans la direction croisant les rainures principales circonférentielles ;
une partie terrestre spécifique (31, 32, 33, 34, 35, 36) qui est au moins l'une des parties terrestres, comprenant :
dans une surface de contact avec le sol, une pluralité de lamelles (4) s'étendant dans la direction croisant les rainures principales circonférentielles ; et
une pluralité de rainures étroites (5) s'étendant dans la direction croisant les rainures principales circonférentielles et présentant une profondeur de rainure de 1,50 mm ou moins ;
dans une région centrale (110a-f) dans la direction de largeur du pneu, les lamelles (4) et les rainures étroites (5, 120a-f) présentent des directions différentes s'étendant dans la direction circonférentielle du pneu lorsqu'elles s'étendent d'un côté à vers un autre côté dans la direction de largeur du pneu,
dans les deux régions de bord (112a-f, 114a-f) sur un côté extérieur à partir de la région centrale (110a-f) dans la direction de largeur du pneu, les lamelles (4) et les rainures étroites (5, 122a-f, 124a-f) présentent la même direction s'étendant dans la direction circonférentielle du pneu lorsqu'elles s'étendent dudit côté vers l'autre côté dans la direction de largeur du pneu ; et
la partie terrestre spécifique (31, 32, 33, 34, 35, 36) comprenant une partie terrestre comportant au moins une partie terrestre (31, 36) sur un côté extérieur dans la direction de largeur du pneu définie comme un côté éloigné du plan équatorial (CL) du pneu dans la direction de largeur du pneu,
**caractérisé en ce que**
la pluralité de rainures étroites (5) s'étendent sans se croiser.

2. Pneu selon la revendication 1, dans lequel la partie terrestre spécifique comporte une pluralité de blocs définis par les rainures principales circonférentielles et les rainures de barrettes.

3. Pneu selon la revendication 1 ou 2, dans lequel une longueur de la partie terrestre spécifique dans la direction croisant les rainures principales circonférentielles est considérée comme 100 %, et une longueur de la région centrale (100a-f) dans la direction croisant les rainures principales circonférentielles est de 60 % ou plus et de 80 % ou moins.

4. Pneu selon l'une quelconque des revendications 1 à 3, dans lequel les lamelles présentent un angle d'inclinaison par rapport à la direction circonférentielle du pneu de 45 ° ou plus et de 80 ° ou moins.

5. Pneu selon l'une quelconque des revendications 1 à 4, dans lequel les rainures étroites (5, 120a-f) présentent un angle d'inclinaison (θ1) par rapport à la direction circonférentielle du pneu dans la région centrale (110a-f) de 40 ° ou plus et de 65 ° ou moins.

6. Pneu selon l'une quelconque des revendications 1 à 5, dans lequel les rainures étroites (5, 122a-f, 124a-f) présentent un angle d'inclinaison (θ2, θ3) par rapport à la direction circonférentielle du pneu dans les régions de bord (112a-f, 114a-f) de 50 ° ou plus et de 80 ° ou moins.

7. Pneu selon l'une quelconque des revendications 1 à 6, dans lequel les rainures étroites (5) présentent une profondeur de rainure de 0,05 mm ou plus et de 1,50 mm ou moins et une largeur de rainure de 0,10 mm ou plus et de 0,80 mm ou moins, et une distance entre les rainures étroites (5) adjacentes les une aux autres est de 0,50 mm ou plus et de 2,00 mm ou moins.

8. Pneu selon l'une quelconque des revendications 1 à 7, dans lequel une extrémité des rainures étroites (5, 122a-f, 124a-f) dans la région centrale (100a-f) est reliée à une extrémité des rainures étroites (5, 122a-f, 124a-f) dans les régions de bord (112a-f, 114a-f).
